# EUROPEAN PATENT APPLICATION

(11) **EP 4 675 982 A1**
(43) Date of publication of application: **07.01.2026**
(21) Application number: 24796027.1
(22) Date of filing: 22.04.2024
(51) Int. Cl.: H04L 12/12

(54) **CONTROL METHOD AND APPARATUS, CHIP, NETWORK DEVICE, AND COMMUNICATION SYSTEM**

(30) Priority: 25.04.2023 CN 202310475262; 20.06.2023 CN 202310742710
(71) Applicant: Huawei Technologies Co., Ltd., Shenzhen, Guangdong 518129 (CN)
(72) Inventor: CAO, Shui, Shenzhen, Guangdong 518129 (CN); XIANG, Haizhou, Shenzhen, Guangdong 518129 (CN); FU, Peipei, Shenzhen, Guangdong 518129 (CN); QIU, Yan, Shenzhen, Guangdong 518129 (CN)
(74) Representative: Maiwald GmbH
(86) International application number: PCT/CN2024/089182
(87) International publication number: WO 2024/222646

(57) **Abstract**

A control method and apparatus, a chip, a network device, and a communication system are disclosed, and relate to the communication field. The method includes: A control chip of a network device adjusts, according to an energy saving strategy and performance data of the network device, enabling or disabling of a port or a lane corresponding to the port in the network device. The energy saving strategy indicates a condition for enabling or disabling the port or the lane corresponding to the port in the network device. The performance data indicates a running feature of the port in the network device in a current period. In this way, network devices do not need to negotiate with each other, or be controlled by a controller; instead, each network device only needs to adjust, based on performance of the network device, enabling or disabling of the port or the lane corresponding to the port in the network device. This simplifies a process of controlling the port or the lane corresponding to the port in the network device, allows for quick and timely adjustment for the network device, and reduces energy consumption of the network device.

## Description

This application claims priorities to Chinese Patent Application No. 202310475262.2, filed with the China National Intellectual Property Administration on April 25, 2023 and entitled "CONTROL METHOD", and to Chinese Patent Application No. 202310742710.0, filed with the China National Intellectual Property Administration on June 20, 2023 and entitled "CONTROL METHOD AND APPARATUS, CHIP, NETWORK DEVICE, AND COMMUNICATION SYSTEM", both of which are incorporated herein by reference in their entireties.

### TECHNICAL FIELD

This application relates to the communication field, and in particular, to a control method and apparatus, a chip, a network device, and a communication system.

### BACKGROUND

As a scale of a data center gradually expands, energy consumption of the data center accordingly increases. Energy consumption of a network part accounts for a significant proportion in the overall energy consumption of the data center. Currently, management lanes need to be additionally constructed between network devices, and after signaling is sent through the management lanes for mutual confirmation, statuses of the lanes indicated by a control center are adjusted, to change energy consumption of the network devices. Therefore, a process of controlling the network device is complex, hindering prompt adjustments to the energy consumption of the network device.

### SUMMARY

This application provides a control method and apparatus, a chip, a network device, and a communication system, to simplify a process of controlling a port or a lane corresponding to the port in a network device, quickly adjust the network device in time, and reduce energy consumption of the network device.

According to a first aspect, a control method is provided, and the method is performed by a control chip of a network device. The method includes: adjusting, according to an energy saving strategy and performance data of the network device, enabling or disabling of a port or a lane corresponding to the port in the network device. The energy saving strategy indicates a condition for enabling or disabling the port or the lane corresponding to the port in the network device. The performance data indicates a running feature of the port in the network device in a current period.

Compared with a solution in which after network devices send signaling for mutual confirmation, statuses of lanes indicated by a control center are adjusted, to change energy consumption of the network devices, in the solution provided in this application, network devices do not need to negotiate with each other, or be controlled by a controller. The network device only needs to adjust, based on performance of the network device, enabling or disabling of the port or the lane corresponding to the port in the network device. This simplifies a process of controlling the port or the lane corresponding to the port in the network device, allows for quick and timely adjustment for the network device, and reduces energy consumption of the network device.

The performance data includes at least one of a port bandwidth usage ratio and a queue depth.

In a possible implementation, adjusting, according to the energy saving strategy and the performance data, the status of the port or the lane corresponding to the port includes: when the performance data meets a disabling condition indicated by the energy saving strategy, adjusting, based on the performance data, a status of at least one port or a status of a lane corresponding to the port in the network device. In this way, the status of the at least one port or the status of the lane corresponding to the port in the network device is adjusted based on the condition indicated by the energy saving strategy, to improve adjustment precision.

In another possible implementation, adjusting the status of the lane corresponding to the port includes: adjusting a status of a serializer deserializer (serdes) corresponding to the lane, to transit from an active state to an energy saving state. Therefore, because the state of the serializer deserializer is adjusted to the energy saving state, energy consumption of the serializer deserializer is reduced, and the energy consumption of the network device is reduced.

In another possible implementation, the port is configured to send the data, and adjusting the status of the lane corresponding to the port includes: indicating a link layer to stop data transmission, and adjusting the status of the lane corresponding to the port. In this way, it is ensured that data sending on the link is completed, and a data loss is prevented in a disabling process.

In another possible implementation, the network device further includes a second chip, the port is configured to send data, and adjusting the status of the lane corresponding to the port includes: indicating the second chip to stop sending a training bitstream, and adjusting the status of the lane corresponding to the port.

In another possible implementation, the port is configured to receive data, and adjusting the status of the lane corresponding to the port includes: when no training bitstream is received, adjusting the status of the lane corresponding to the port.

Therefore, because a transmit end does not send the training bitstream (training stream) to a receive end, the receive end does not receive the training bitstream. When it is determined that the lane fails to be trained, the status of the lane corresponding to the port is adjusted as soon as possible, to reduce the energy consumption of the network device.

The port is configured to send the data, or the network device serves as the transmit end. In this case, adjusting the status of the port or the lane corresponding to the port means to adjust the status of the port or the lane corresponding to the port configured to send the data. The port is configured to receive the data, or the network device serves as the receive end. In this case, adjusting the status of the port or the lane corresponding to the port means to adjust the status of the port or the lane corresponding to the port configured to receive the data.

In another possible implementation, the status of the port or the lane corresponding to the port is disabled, and the method further includes: when the performance data meets an enabling condition indicated by the energy saving strategy, adjusting the port or the lane corresponding to the port to be enabled. Therefore, when data needs to be transmitted, the port or the lane corresponding to the port is enabled, to restore data transmission, so as to prevent a service from being affected by disabling of the port or the lane corresponding to the port.

In another possible implementation, adjusting the port or the lane corresponding to the port to be enabled includes: adjusting the status of the serializer deserializer corresponding to the lane, to transit from the energy saving state to the active state. Therefore, because the state of the serializer deserializer is adjusted to the active state, the serializer deserializer is in an operating state, and data can be transmitted through the lane corresponding to the port.

For example, when the training bitstream is received, the status of the serializer deserializer corresponding to the lane is adjusted, to transit from the energy saving state to the active state.

In another possible implementation, obtaining the energy saving strategy of the network device includes: obtaining the energy saving strategy of the network device based on a feature of the network device, where the feature of the network device includes at least one of the following: a position of the network device in a network, a scale of the network device, a configuration of the network device, and the performance data of the network device. Therefore, the network device periodically obtains the energy saving strategy, to improve precision of controlling, by the network device according to the energy saving strategy, the port and the lane included in the port, and effectively reduce the energy consumption of the network device.

According to a second aspect, a control apparatus is provided. The control apparatus includes modules configured to perform the control method according to the first aspect or any possible design of the first aspect. For example, the control apparatus includes a communication module and an energy consumption control module. The communication module is configured to obtain an energy saving strategy of a network device, where the energy saving strategy indicates a condition for enabling or disabling a port or a lane corresponding to the port in the network device; the energy consumption control module is configured to obtain performance data of the network device, where the performance data indicates a running feature of the port in the network device in a current period; and the energy consumption control module is configured to adjust, according to the energy saving strategy and the performance data, a status of the port or the lane corresponding to the port, where the status includes enabled or disabled.

In a possible implementation, when adjusting, according to the energy saving strategy and the performance data, the status of the port or the lane corresponding to the port, the energy consumption control module is specifically configured to: when the performance data meets a disabling condition indicated by the energy saving strategy, adjust, based on the performance data, a status of at least one port or a status of a lane corresponding to the port in the network device.

In another possible implementation, the performance data includes at least one of an interface bandwidth usage ratio, a queue depth, and a packet delay.

In another possible implementation, when adjusting the status of the lane corresponding to the port, the energy consumption control module is specifically configured to adjust a status of a serializer deserializer corresponding to the lane, to transit from an active state to an energy saving state.

In another possible implementation, the port is configured to send data, and the energy consumption control module is configured to: indicate a second chip to stop sending a training bitstream, and adjust the status of the lane corresponding to the port.

In another possible implementation, the port is configured to receive data, and the energy consumption control module is configured to: when no training bitstream is received, adjust the status of the lane corresponding to the port.

In another possible implementation, the port is configured to send data, and when adjusting the status of the lane corresponding to the port, the energy consumption control module is specifically configured to: indicate a link layer to stop data transmission, and adjust the status of the lane corresponding to the port.

In another possible implementation, the status of the port or the lane corresponding to the port is disabled, and the energy consumption control module is further configured to: when the performance data meets a disabling condition indicated by the energy saving strategy, adjust the port or the lane corresponding to the port to be enabled.

In another possible implementation, when adjusting the lane corresponding to the port to be enabled, the energy consumption control module is specifically configured to adjust the status of the serializer deserializer corresponding to the lane, to transit from the energy saving state to the active state.

For example, when the training bitstream is received, the status of the serializer deserializer corresponding to the lane is adjusted, to transit from the energy saving state to the active state.

In another possible implementation, when obtaining the energy saving strategy of the network device, the communication module is specifically configured to obtain the energy saving strategy of the network device based on a feature of the network device, where the feature of the network device includes at least one of the following: a position of the network device in a network, a scale of the network device, a configuration of the network device, and the performance data of the network device.

According to a third aspect, a chip is provided, including a processor and a power supply circuit. The power supply circuit is configured to supply power to the processor, and the processor is configured to perform operation steps of the method according to the first aspect or any possible implementation of the first aspect.

According to a fourth aspect, a network device is provided, and the network device includes at least one processor and a memory. The memory is configured to store a group of computer instructions, and when executing the group of computer instructions, the processor performs operation steps of the method according to the first aspect or any possible implementation of the first aspect.

According to a fifth aspect, a communication system is provided, and the communication system includes a first network device and a second network device. The first network device and the second network device perform operation steps of the method according to the first aspect or any possible implementation of the first aspect.

According to a sixth aspect, a computer-readable storage medium is provided, including computer software instructions. When the computer software instructions are run on a network device, the network device is enabled to perform operation steps of the method according to the first aspect or any possible implementation of the first aspect.

According to a seventh aspect, a computer program product is provided. When the computer program product runs on a computer, the computer is enabled to perform operation steps of the method according to the first aspect or any possible implementation of the first aspect.

For technical effect brought by any design manner in the second aspect to the seventh aspect, refer to the technical effect brought by the first aspect or different design manners in the first aspect. Details are not described herein again.

In this application, based on the implementations according to the foregoing aspects, the implementations may be further combined to provide more implementations.

### BRIEF DESCRIPTION OF DRAWINGS

FIG. 1 is a diagram of a relationship between a network device, a port, a lane, and a serializer deserializer according to this application;
FIG. 2 is a diagram of an architecture of a communication system according to this application;
FIG. 3 is a schematic flowchart of a control method according to this application;
FIG. 4 is a diagram in which an energy saving strategy is configured according to this application;
FIG. 5 is a diagram of status transition of a serializer deserializer according to this application;
FIG. 6 is a diagram of status transition of a lane according to this application;
FIG. 7A to FIG. 7C are a schematic flowchart of an energy saving mechanism of a lane according to this application;
FIG. 8A and FIG. 8B are a schematic flowchart in which a lane is forcibly disabled according to this application;
FIG. 9A and FIG. 9B are a schematic flowchart in which a lane is non-forcibly disabled according to this application;
FIG. 10A and FIG. 10B are a schematic flowchart in which a lane is enabled according to this application;
FIG. 11 is a diagram of a control process according to this application;
FIG. 12(a) and FIG. 12(b) are a diagram of a control process according to this application;
FIG. 13A and FIG. 13B are a schematic flowchart of an energy saving mechanism of a port according to this application;
FIG. 14 is a diagram of a structure of a control apparatus according to this application; and
FIG. 15 is a diagram of a structure of a network device according to this application.

### DESCRIPTION OF EMBODIMENTS

For ease of understanding, main terms in this application are first explained.

**Data center (data center):** a global, collaborative network of specific devices that transmit, accelerate, display, compute, and store data information over internet (internet) infrastructure.

**Energy consumption (energy consumption):** an evaluation metric that assesses an amount of energy consumed during the use of a product.

**Port (port):** an interface used for connection between network devices (for example, hubs, switches, and routers) in network technologies.

**Link (link):** also known as a physical link or a communication link, which is a physical line between two nodes without other switching nodes in between. A single link may include a plurality of lanes (lane), also known as a physical lane, a physical path, or a signal lane. For example, one link may include 2, 4, 8, or 16 lanes.

**Serializer deserializer (Serializer Deserializer, Serdes):** also known as a serializer/deserializer, which denotes the conversion from parallel signals into serial signals, or vice versa. The serializer deserializer may also be referred to. Each lane corresponds to one serdes.

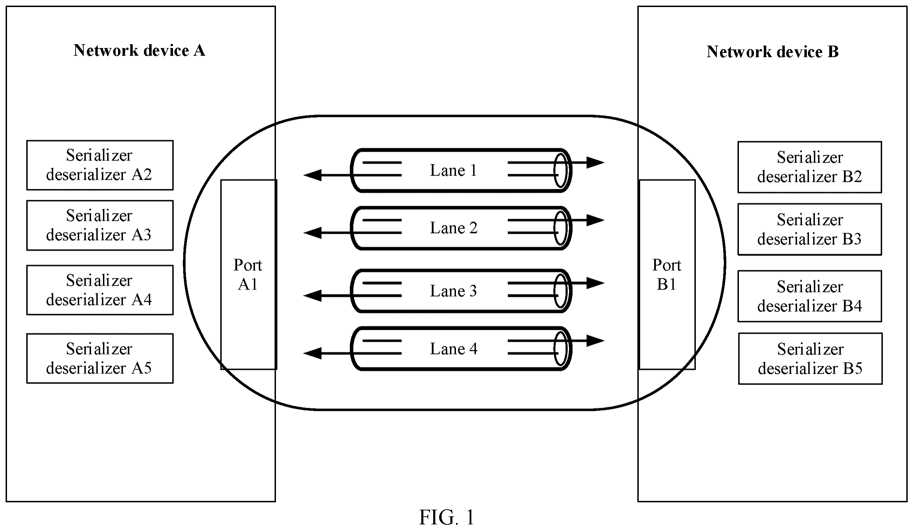

For example, FIG. 1 is a diagram of a relationship between a network device, a port, a lane, and a serializer deserializer according to this application. As shown in FIG. 1, a network device A includes a port A1. A network device B includes a port B1. A link between the port A1 and the port B1 includes four lanes: a lane 1, a lane 2, a lane 3, and a lane 4. When data is transmitted from the port A1 to the port B1 or from the port B1 to the port A1, the data may be transmitted through the four lanes. The network device A further includes a serializer deserializer A2, a serializer deserializer A3, a serializer deserializer A4, and a serializer deserializer A5. The network device B further includes a serializer deserializer B2, a serializer deserializer B3, a serializer deserializer B4, and a serializer deserializer B5. The lane 1 corresponds to the serializer deserializer A2 and the serializer deserializer B2, the lane 2 corresponds to the serializer deserializer A3 and the serializer deserializer B3, the lane 3 corresponds to the serializer deserializer A4 and the serializer deserializer B4, and the lane 4 corresponds to the serializer deserializer A5 and the serializer deserializer B5. For example, the serializer deserializer A2 may convert a parallel signal into a serial signal, and transmit the serial signal to the port B1 through the lane 1. The serializer deserializer B2 may convert a serial signal into a parallel signal.

To resolve a problem of how to promptly adjust energy consumption of a network device, this application provides a control method in which enabling or disabling of a port or a lane of the port in the network device is adjusted according to an energy saving strategy and performance data of the network device. The energy saving strategy indicates a condition for enabling or disabling the port or the lane corresponding to the port in the network device. The performance data indicates a running feature of the port in the network device in a current period.

Compared with a solution in which after network devices send signaling for mutual confirmation, statuses of lanes indicated by a control center are adjusted, to change energy consumption of the network devices, in the solution provided in this application, network devices do not need to negotiate with each other, or be controlled by a controller. The network device only needs to adjust, based on performance of the network device, enabling or disabling of the port or the lane corresponding to the port in the network device. This simplifies a process of controlling the port or the lane of the port in the network device, allows for quick and timely adjustment for the network device, and reduces energy consumption of the network device.

The solution provided in this application may be applied to a communication system like a cluster network or a supernode interconnection network, for example, a high-performance computing (High performance computing, HPC) network or a high availability (High Availability, HA) network.

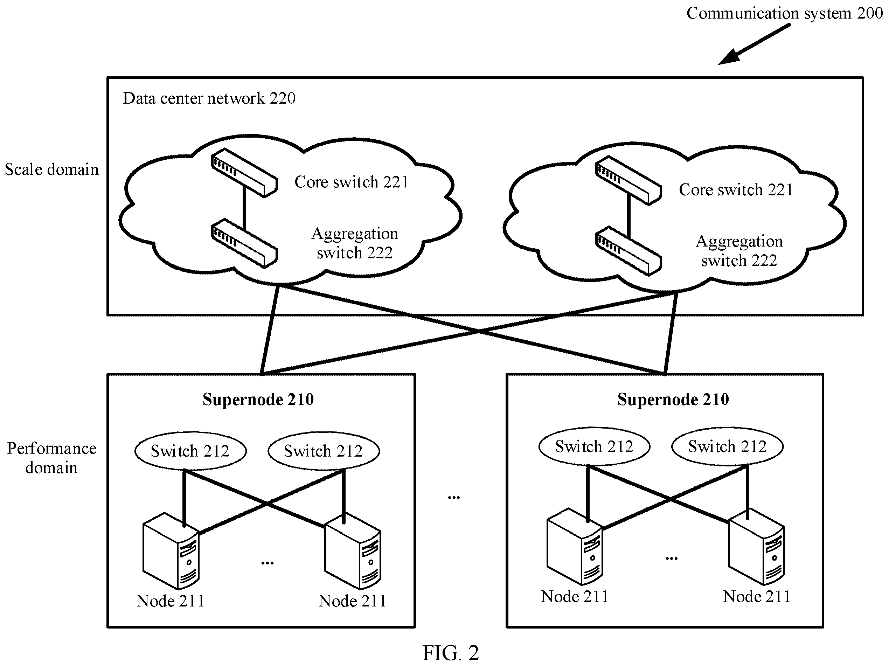

For example, as shown in FIG. 2, a communication system 200 is an entity that provides high-performance computing. The communication system 200 includes a plurality of supernodes 210. The supernode 210 includes a plurality of nodes 211. The supernode 210 may be a cabinet server or a blade server. The node 211 may be a processor, a server, a desktop computer, a controller of a storage array, a memory, or the like. The processor may be an XPU used for data processing such as a central processing unit (central processing unit, CPU), a graphics processing unit (graphics processing unit, GPU), a data processing unit (data processing unit, DPU), a neural processing unit (neural processing unit, NPU), an embedded neural-network processing unit (neural-network processing unit, NPU), and the like. For example, the supernode 210 may include a computing node and a storage node.

The plurality of nodes 211 in the supernode 210 are connected by using a high-speed interconnection technology with a high bandwidth and a low delay. For example, as shown in FIG. 2, the nodes 211 are connected via switches 212 by using the high-speed interconnection technology.

Optionally, the plurality of supernodes 210 are connected over a data center network 220. The data center network 220 includes a plurality of core switches 221 and a plurality of aggregation switches 222. The data center network 220 may form a scale domain. The plurality of supernodes 210 may form a performance domain.

The data center network topology may include a core layer and an aggregation layer. The core layer is also referred to as a spine (spine) layer. The core layer is a high-speed switching backbone layer of the data center network, and is used to connect the data center to a device (for example, an external operator device) outside the data center. The core layer may include a core switch and a core router that have a high bandwidth (for example, a gigabit-above bandwidth). The core layer is featured in at least one of reliability, high efficiency, redundancy, fault tolerance, manageability, adaptability, a low delay, and the like. Usually, reliability of the data center network can be implemented through a redundancy connection between a plurality of devices.

The aggregation layer is an "intermediate" between an access layer and the core layer, and is configured to aggregate data output by the access layer, to reduce load of the core layer. The aggregation layer includes an aggregation switch.

The network device is configured to: receive data sent by a device, and forward the data to another device. It may be understood that the network device includes a receiving function and a sending function. For example, a sending or receiving direction of a serdes in the network device is configured based on a requirement. If the sending or receiving direction of the serdes is a sending direction, the network device may send data through a lane corresponding to the serdes. If the sending or receiving direction of the serdes is a receiving direction, the network device may receive data through a lane corresponding to the serdes.

In some embodiments, an energy saving agent is configured for the network device in the communication system, and the energy saving agent is configured to adjust enabling or disabling of a port or a lane of the port of the network device according to an energy saving strategy and performance data of the network device. The network device includes but is not limited to the switch included in the supernode, and the data center network includes the core switch, the aggregation switch, and the like.

FIG. 2 is merely a diagram. A quantity of devices included in the communication system is not limited in embodiments of this application. In addition, the connection manner between the switch and the node shown in FIG. 2 is merely an example for description. In actual application, the switch and the node may alternatively be connected in another manner. This is not limited in this application.

Optionally, the communication system may further include another device, for example, may further include a controller. The controller is configured to manage the network device in the communication system, to ensure that the network device operates normally.

In this application, the controller may send the energy saving strategy to the network device. For example, after sending an initial energy saving strategy to the network device, the controller adjusts the energy saving strategy based on performance data periodically reported by the network device, and periodically sends an updated energy saving strategy to the network device. In this way, precision of the energy saving strategy is improved.

Optionally, the controller may be an independent server, and is connected to the network device through a dedicated control lane. The controller may also be deployed on the network device as a module. After the network device is managed by the controller, the controller may start an energy saving strategy configuration delivery process, that is, send the energy saving strategy to the network device managed by the controller.

The following describes in detail implementations of the control method provided in this application with reference to accompanying drawings.

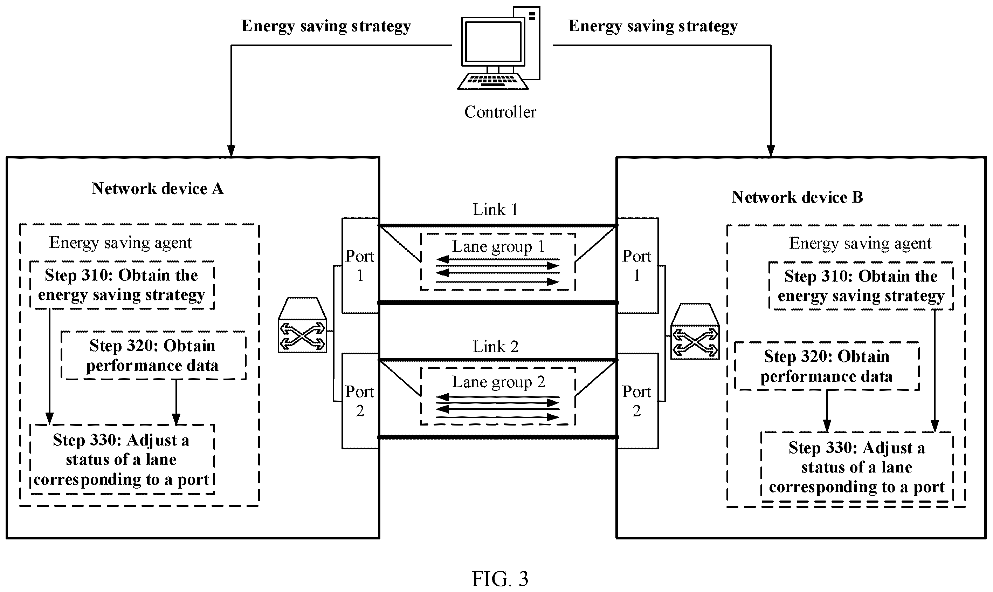

FIG. 3 is a schematic flowchart of a control method according to this application. The method may be performed by a first chip (for example, a control chip) of a network device. The control chip runs an energy saving agent to perform an energy saving operation on the network device. The network device may be a device like the switch, the core switch, or the aggregation switch in the communication system shown in FIG. 2. Herein, an example in which a status of a lane corresponding to a port is adjusted is used for description. As shown in FIG. 3, the method includes the following steps.

**Step 310: Obtain an energy saving strategy of a network device.**

The energy saving strategy indicates a condition for enabling or disabling a lane corresponding to a port in the network device. It may be understood that, when the lane corresponding to the port in the network device is disabled, the lane corresponding to the port cannot transmit data, thereby reducing energy consumption of the network device. On the contrary, when the lane corresponding to the port in the network device is enabled, data transmission based on the lane corresponding to the port is restored.

In some embodiments, a memory of the network device stores the preconfigured energy saving strategy. The network device may obtain the preconfigured energy saving strategy from the memory.

In some other embodiments, the network device receives the energy saving strategy sent by a controller. If the controller is an independent server, the energy saving strategy is received through a link between the network device and the controller. If the controller is deployed in the network device, the controller may be a general-purpose chip having a control function, for example, a CPU.

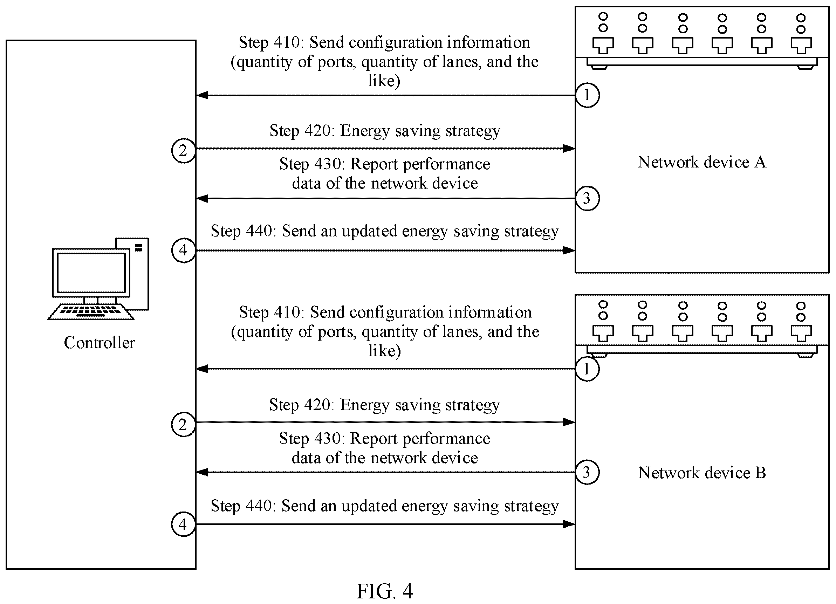

For example, as shown in FIG. 4, a network device sends configuration information to a controller (step 410). The configuration information includes a quantity of ports, a quantity of lanes corresponding to the ports, an address, and a device identifier that are included in the network device. The device identifier includes at least one of a device model, a device manufacturer, and a device name.

The controller generates an energy saving strategy of the network device based on the configuration information, and sends the energy saving strategy to the network device (step 420). For example, the controller determines a feature of the network device based on the configuration information, to generate the energy saving strategy. The feature of the network device includes a position of the network device in a network, a scale of the network device (for example, a quantity of ports and a quantity of lanes), a configuration of the network device (for example, a direction of the lane, a configuration of the port, a route configuration, and quality of service), importance of the network device in the network, and the like. For example, the network device is a device configured to construct a core layer. The controller generates the energy saving strategy while ensuring reliability and a low delay of the network device, to prevent the reliability and the low delay of the network device from being affected by reduction of energy consumption of the network device, and achieve balance between the energy consumption, the reliability, and the low delay of the network device.

In some embodiments, the energy saving strategy that is of the network device and that is generated by the controller based on the configuration information may be an initial energy saving strategy. To improve accuracy of controlling, by the network device according to the energy saving strategy, a status of a lane corresponding to a port, and effectively reduce the energy consumption of the network device, the network device may further periodically obtain the energy saving strategy. For example, the network device reports performance data of the network device to the controller (step 430). The controller updates the initial energy saving strategy based on the performance data of the network device, and generates an updated energy saving strategy. The controller may send the updated energy saving strategy to the network device (step 440).

Optionally, the energy saving strategy includes at least one of an energy saving enabling identifier, a port identifier, a port priority, a priority of a lane corresponding to the port, a detection frequency, and a threshold. The energy saving enabling identifier indicates whether to enable energy saving. For example, if the energy saving enabling identifier is 1, it indicates enabling of energy saving; or if the energy saving enabling identifier is 0, it indicates disabling of energy saving. The port identifier is used to uniquely indicate a port. The detection frequency indicates a quantity of times of periodically detecting performance of the network device per unit time. The threshold indicates a boundary for starting energy saving based on the performance of the network device. The threshold includes a minimum threshold and a maximum threshold. The minimum threshold indicates disabling of a port or a lane corresponding to the port of the network device. The maximum threshold indicates restarting of a port or a lane corresponding to the port of the network device.

**Step 320: Obtain performance data of the network device.**

The performance data indicates a running feature of the port in the network device in a current period. For example, the performance data includes at least one of a data interface bandwidth usage ratio, a queue depth, and a packet delay. The interface bandwidth usage ratio indicates bandwidth usage of received or sent information through an interface per unit time. For example, if the interface bandwidth is 100 Mbps and actual traffic is 90 Mbps, the usage ratio is 90%. If the interface bandwidth usage ratio is high, it indicates that the traffic is heavy. If the interface bandwidth usage ratio is low, it indicates that the traffic is light. The queue depth indicates a quantity of to-be-transmitted packets. The packet delay indicates duration for transmitting a packet from a transmit end to a receive end. States of the port include an energy saving state and an active state.

In some embodiments, the network device obtains the performance data of the network device according to the energy saving strategy. For example, if the network device determines that an energy saving enabling identifier included in the energy saving strategy indicates enabling of energy saving, the network device obtains the performance data of each port in the network device.

For another example, the network device periodically obtains the performance data of each port in the network device based on a detection frequency included in the energy saving strategy.

For another example, the energy saving strategy includes a port identifier, and the network device obtains performance data of a port indicated by the port identifier.

For another example, the energy saving strategy includes a port priority, and the network device obtains performance data of a port in the network device based on the port priority.

**Step 330: Adjust, according to the energy saving strategy and the performance data, a status of the lane corresponding to the port.**

When the performance data of the port meets a condition indicated by the energy saving strategy, based on the performance data of the port, the status of the lane corresponding to the port in the network device is adjusted, and the status includes enabled or disabled.

For example, the condition indicates whether the interface bandwidth usage ratio exceeds an interface bandwidth usage ratio threshold. When the interface bandwidth usage ratio of the port is less than or equal to a first interface bandwidth usage ratio threshold, it indicates that load of the port is low, and there is a small amount of to-be-transmitted data. In this case, at least one lane corresponding to the port is disabled. When the interface bandwidth usage ratio of the port is greater than or equal to a second interface bandwidth usage ratio threshold, it indicates that the load of the port is high, and there is a large amount of to-be-transmitted data. In this case, at least one lane corresponding to the port is enabled. The first interface bandwidth usage ratio threshold is less than the second interface bandwidth usage ratio threshold. The first interface bandwidth usage ratio threshold may be a minimum threshold for disabling the lane. The second interface bandwidth usage ratio threshold may be a maximum threshold for enabling the lane.

For another example, the condition indicates whether the queue depth of the port exceeds a queue depth threshold. For another example, the condition indicates whether the packet delay of the port exceeds a delay threshold.

In some embodiments, adjusting the status of the lane corresponding to the port may be adjusting a status of a serdes corresponding to the lane corresponding to the port. The states of the serdes include an active state and an energy saving state. Active states of the serdes include an operating state and a non-operating state. The operating state indicates that the serdes converts a parallel signal into a serial signal, or converts a serial signal into a parallel signal, a lane corresponding to the serdes normally transmits data, and energy consumption of the serdes is high. The non-operating state indicates that the serdes does not transmit data and is in an idle state. The energy saving state of the serdes indicates that the serdes is in a low-power-consumption state, and the serdes disables a function of a parallel signal and a serial signal.

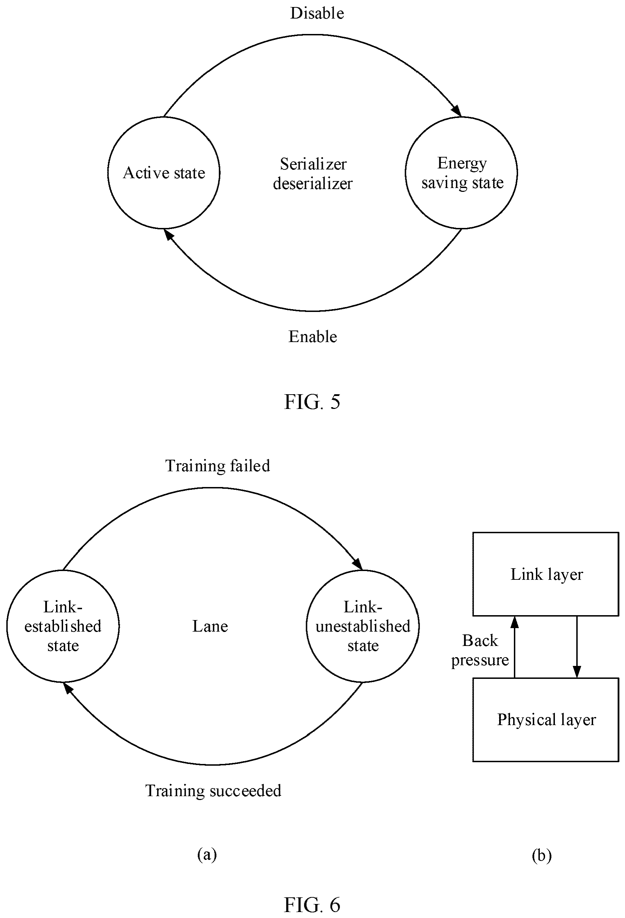

For example, as shown in FIG. 5, disabling the lane corresponding to the port is to transit the state of the serdes from the active state to the energy saving state, and transit the serdes from a high-power-consumption state to the low-power-consumption state. Therefore, because the state of the serdes is adjusted to the energy saving state, the energy consumption of the serdes is reduced, and the energy consumption of the network device is reduced. Enabling the lane corresponding to the port is to transit the state of the serdes from the energy saving state to the active state, and restore data transmission.

For example, a first port of a first network device is connected to a second port of a second network device through a link. The first network device sends data to the second network device through the first port. The second network device receives, through the second port, the data sent by the first network device. For a transmit side, when performance data of the first port meets a disabling condition indicated by the energy saving strategy, a lane on the link between the first port and the second port is disabled, that is, a serdes in the network device in which the first port corresponding to the lane is located is adjusted to the energy saving state, and no data is transmitted on the lane. For a receive side, when performance data of the second port meets the disabling condition indicated by the energy saving strategy, a serdes in the network device in which the second port corresponding to the lane is located is adjusted to the energy saving state. In this way, the network devices do not need to negotiate with each other, or be controlled by the controller. The network device only needs to adjust, based on performance of the network device, enabling or disabling of the lane corresponding to the port in the network device. This simplifies a process of controlling the lane corresponding to the port in the network device, quickly adjusts the lane of the network device to be disabled in time, and reduces the energy consumption of the network device.

It should be noted that a link corresponding to a port includes a plurality of lanes, and the plurality of lanes may form a lane group. When performance data of the port meets the disabling condition indicated by the energy saving strategy, at least one lane in the lane group is disabled according to a preset rule. For example, at least one lane is randomly selected from the lane group, and the at least one lane obtained through selection is disabled. For another example, at least one lane is disabled in ascending order of identifiers of the lanes in the lane group. For another example, based on the performance data of the port, while a transmission requirement of to-be-transmitted data is ensured, at least one lane is randomly selected from the lane group, and the at least one lane obtained through selection is disabled.

For example, one link includes four lanes, and two lanes are required to transmit to-be-transmitted data. In this case, two lanes are randomly selected from the four lanes, and two lanes are disabled.

In addition, to avoid a case in which data cannot be transmitted on the link corresponding to the port due to disabling of the plurality of lanes included in the link corresponding to the port, a status of at least one lane on the link corresponding to the port is kept enabled, to ensure that data is transmitted on the link corresponding to the port. The port transmits data through the at least one lane that is kept, to determine, based on the performance data of the port, whether to enable the lane that is disabled and that corresponds to the port.

When the performance data of the port meets an enabling condition indicated by the energy saving strategy, a lane on the link corresponding to the port is enabled, that is, a serdes corresponding to the lane is adjusted to the active state. A quantity of lanes that are enabled and that correspond to the port is less than or equal to a quantity of lanes that are disabled and that correspond to the port. At least one lane is randomly enabled from the lane that is disabled and that corresponds to the port, or based on the performance data of the port, at least one lane is enabled from the lane that is disabled and that corresponds to the port.

Optionally, for the port for receiving data, when performance data of the port meets the enabling condition indicated by the energy saving strategy, all lanes that are disabled and that correspond to the port are enabled. In this way, the port enables these disabled lanes, to restore data transmission through these lanes as soon as possible. In some other embodiments, after at least one lane corresponding to the port is adaptively disabled based on the performance data of the port, and after a timer expires, all lanes that are disabled and that correspond to the port are enabled. In some other embodiments, after all the lanes that are disabled and that correspond to the port are enabled, when the performance data of the port meets the disabling condition indicated by the energy saving strategy, at least one enabled lane is disabled, or no energy saving operation is performed on the enabled lane of the port, to receive data based on these enabled lanes as soon as possible.

In the foregoing embodiment, when the performance data of the port meets the disabling condition indicated by the energy saving strategy, the lane corresponding to the port in the network device is disabled, that is, the serdes corresponding to the lane is in the energy saving state, and no data is transmitted through the lane corresponding to the serdes, so that the status of the lane is quickly adjusted, and the power consumption of network device is reduced by forcibly disabling the serdes.

In some other embodiments, the power consumption of the network device is reduced by non-forcibly disabling the serdes. When the performance data of the port meets the condition indicated by the energy saving strategy, sending of a training bitstream is stopped, so that the port for receiving data detects, as soon as possible, that data transmission of the port is abnormal, and adjusts a status of a lane corresponding to the port.

Herein, an example in which the first network device serves as the transmit end and the second network device serves as the receive end is used for description. The first port of the first network device is connected to the second port of the second network device through a first link. The first link includes N lanes.

When the performance data of the first port meets the disabling condition indicated by the energy saving strategy, it is determined to disable a first lane corresponding to the first port, and a first chip in the first network device indicates a second chip to stop sending a training bitstream. The first chip is configured to perform an energy saving operation according to the control method provided in this application. The second chip is configured to perform a switching function. Further, the first network device disables the first lane corresponding to the first port, that is, adjusts a status of a serdes corresponding to the first lane in the first network device to the energy saving state.

Because the first network device does not send the training bitstream to the second network device, and the second network device does not receive the training bitstream, the second network device determines that the second port is abnormal, determines that the performance data of the second port meets the disabling condition indicated by the energy saving strategy, and disables a first lane corresponding to the second port, that is, adjusts a status of a serdes corresponding to the first lane in the second network device to the energy saving state.

When the performance data of the first port meets the enabling condition indicated by the energy saving strategy, it is determined to enable the first lane corresponding to the first port, and the first network device sends the training bitstream to the second network device through the first lane corresponding to the first port. When the first lane corresponding to the second port in the second network device is enabled, the second port in the second network device receives the training bitstream through the first lane, and restores data transmission on the first lanes between the first port and the second port.

In some other embodiments, when the performance data of the port meets the disabling condition indicated by the energy saving strategy, a status of a lane corresponding to the port in the network device is adjusted, to indicate a link layer to stop data transmission. It may be understood that a physical layer imposes back pressure at the link layer, that is, the link layer is not allowed to transmit data to the physical layer, to ensure that data sending on the link corresponding to the port is completed, and prevent a data loss in a disabling process.

For example, (a) in FIG. 6 is a diagram of status transition of a lane. If a state of the lane is a link-established state, it indicates that the lane is normal; or if a state of the lane is a link-unestablished state, it indicates that the lane is abnormal. When the lane is in the link-unestablished state, the lane can be trained. After the training is successful, the lane transits from the link-unestablished state to the link-established state. When the lane is in the link-established state, after the lane fails to be trained, the lane transits from the link-established state to the link-unestablished state. As shown in (b) in FIG. 6, a physical layer imposes back pressure at a link layer. For example, a serdes indicates the link layer to stop data transmission.

Optionally, after the lane is trained, the link layer is indicated to cancel the back pressure. For example, after the state of the serdes corresponding to the first lane in the first network device is adjusted to the energy saving state, the link layer is indicated to cancel the back pressure.

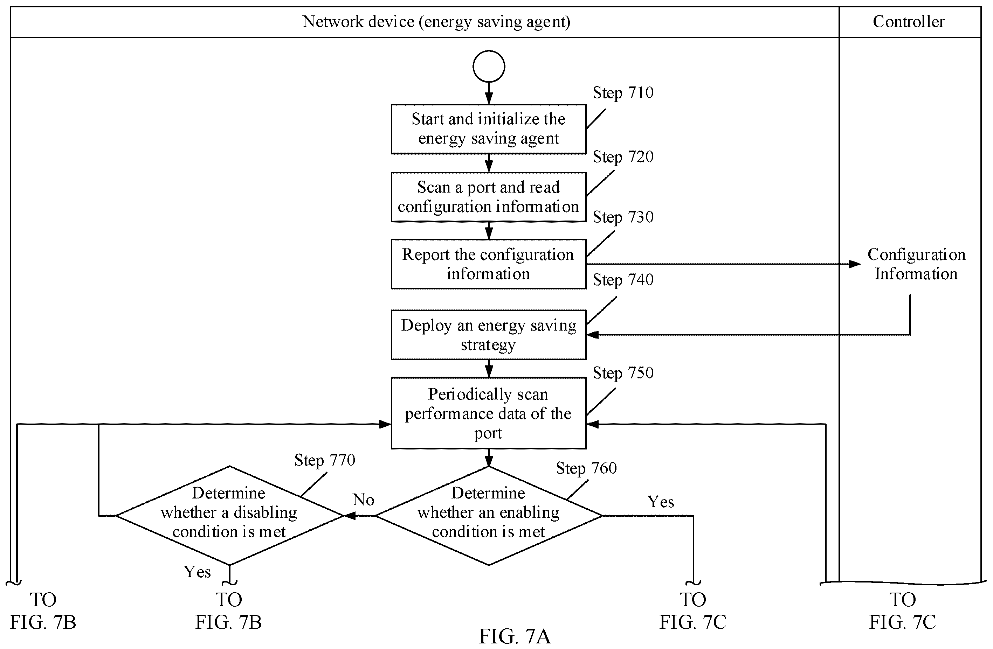

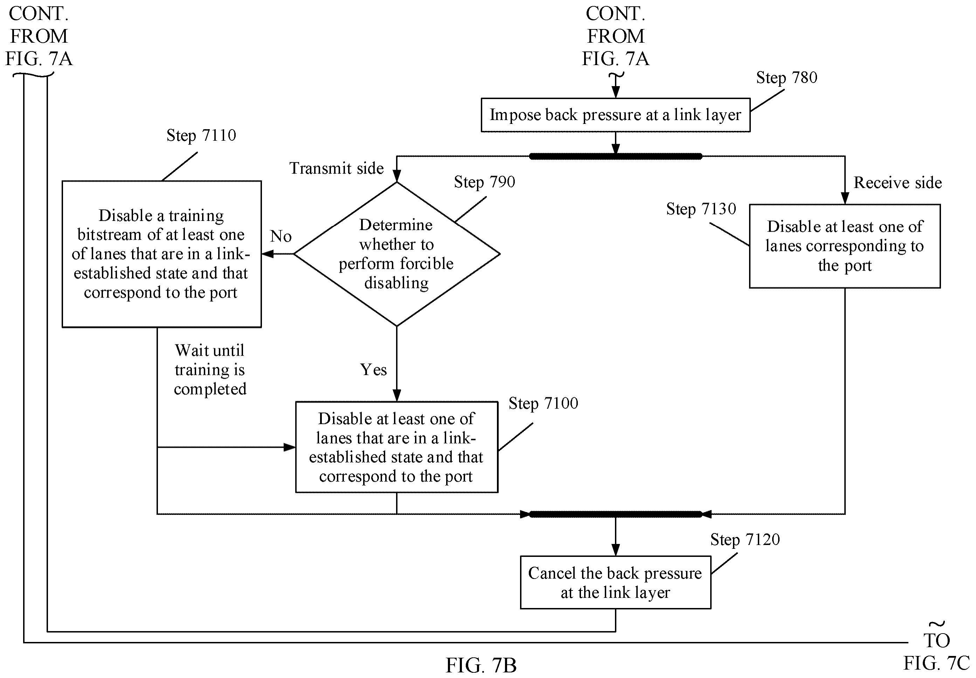

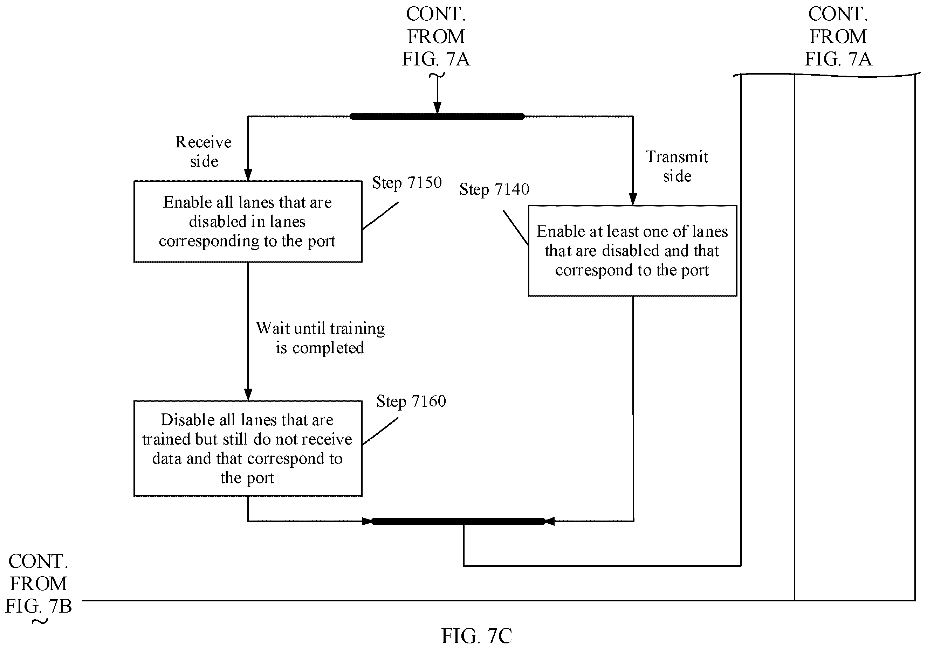

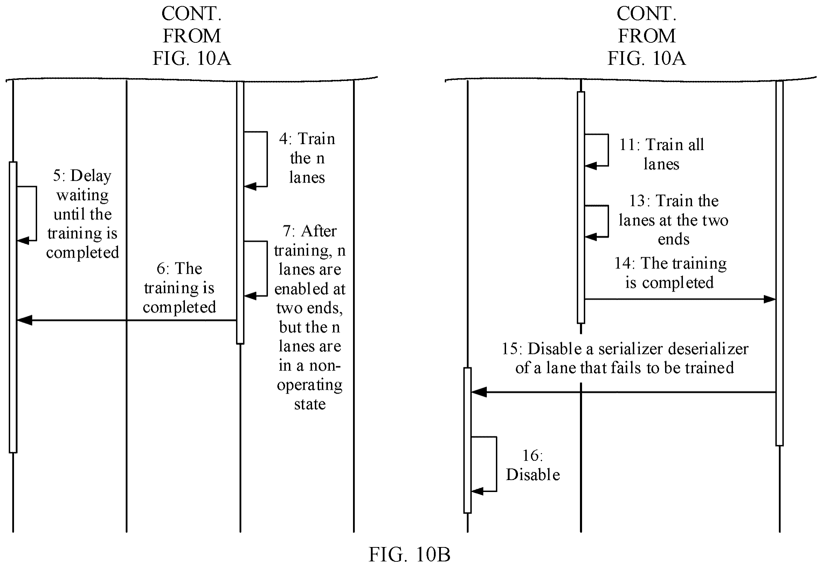

The following schematically describes an overall procedure of the control method provided in this application with reference to FIG. 7A to FIG. 7C to FIG. 10A and FIG. 10B. FIG. 7A to FIG. 7C are a schematic flowchart of an energy saving mechanism according to this application. A network device starts an energy saving agent, and initializes the energy saving agent (step 710). The network device scans a port and reads stored configuration information (step 720). The network device reports the configuration information to a controller (step 730). The network device obtains an energy saving strategy from the controller (step 740). The network device periodically scans performance data of the port (step 750). The network device determines whether the performance data of the port meets an enabling condition (step 760).

When the performance data of the port does not meet the enabling condition, the network device determines whether the performance data of the port meets a disabling condition (step 770).

When the performance data of the port meets the disabling condition, impose back pressure at a link layer (step 780). For a transmit side, determine whether to forcibly disable a lane corresponding to the port (step 790). When the lane corresponding to the port is forcibly disabled, disable at least one of lanes that are in a link-established state and that correspond to the port (step 7100). When the lane corresponding to the port is non-forcibly disabled, disable a training bitstream of at least one of lanes that are in a link-established state and that correspond to the port (step 7110). Wait until training is completed, and perform step 7100 to cancel the back pressure at the link layer (step 7120). For a receive side, disable at least one of lanes corresponding to the port (step 7130).

When the performance data of the port meets the enabling condition, for a transmit side, enable at least one of lanes that are disabled and that correspond to the port (step 7140). For a receive side, enable all lanes that are disabled in lanes corresponding to the port (step 7150). Wait until training is completed, and disable all lanes that are trained but still do not receive data and that correspond to the port (step 7160).

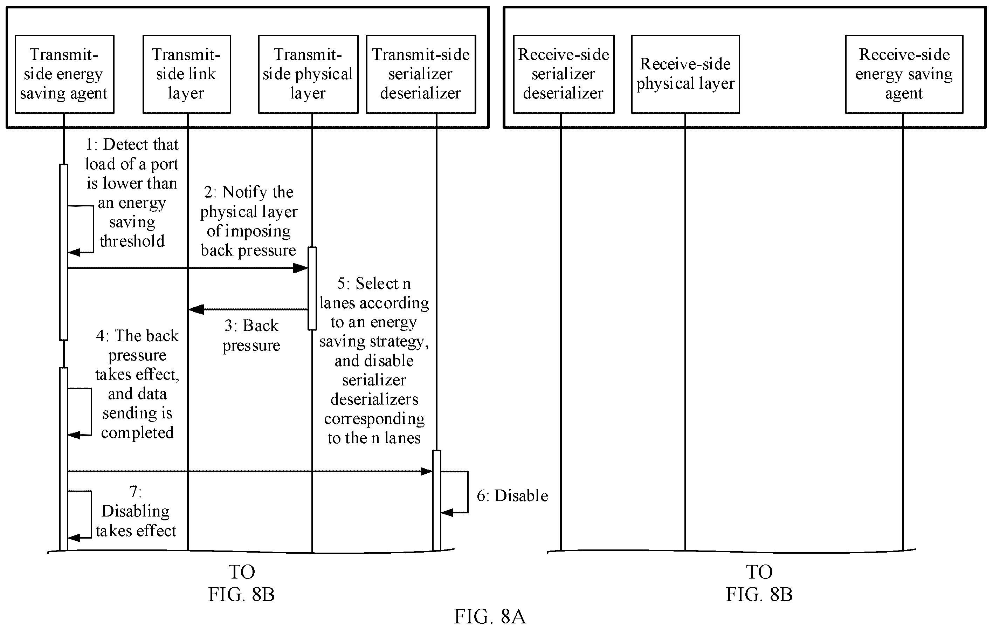

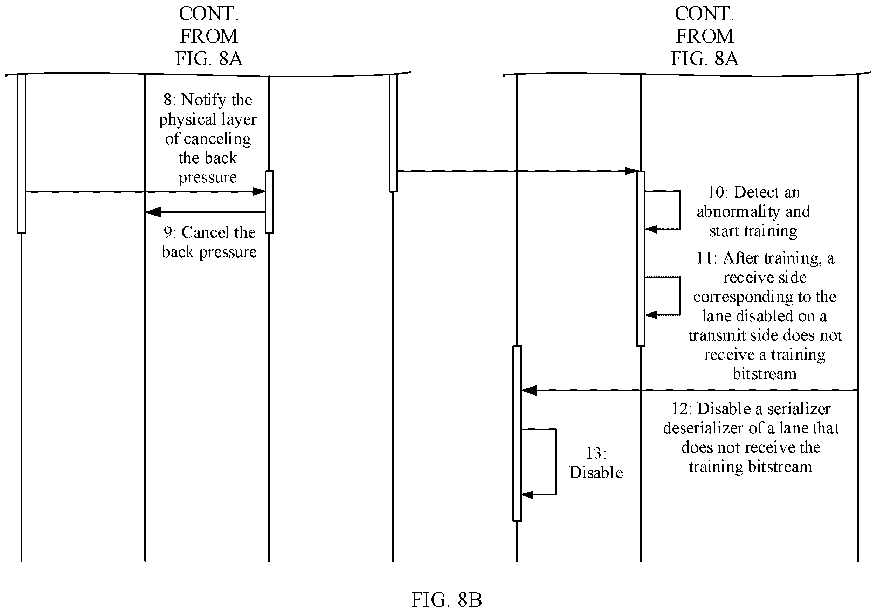

FIG. 8A and FIG. 8B are a schematic flowchart in which a lane is forcibly disabled according to this application. 1: A transmit-side energy saving agent detects that load of a port is lower than an energy saving threshold. 2: The transmit-side energy saving agent notifies a transmit-side physical layer of imposing back pressure. 3: The physical layer imposes back pressure at a transmit-side link layer. 4: The transmit-side energy saving agent determines that the back pressure takes effect and data sending is completed. 5: The transmit-side energy saving agent selects n lanes according to an energy saving strategy, and disables serdeses corresponding to the n lanes. 6: Disable the serdeses corresponding to the n lanes. 7: The transmit-side energy saving agent determines that the disabling takes effect. 8: The transmit-side energy saving agent notifies the transmit-side physical layer of canceling the back pressure. 9: The physical layer cancels the back pressure at the transmit-side link layer. 10: A receive-side physical layer detects an abnormality and starts training. 11: After training, a receive side corresponding to the lane disabled on the transmit side does not receive a training bitstream. 12: Disable a serdes of a lane that does not receive the training bitstream. 13: Disable the serdes.

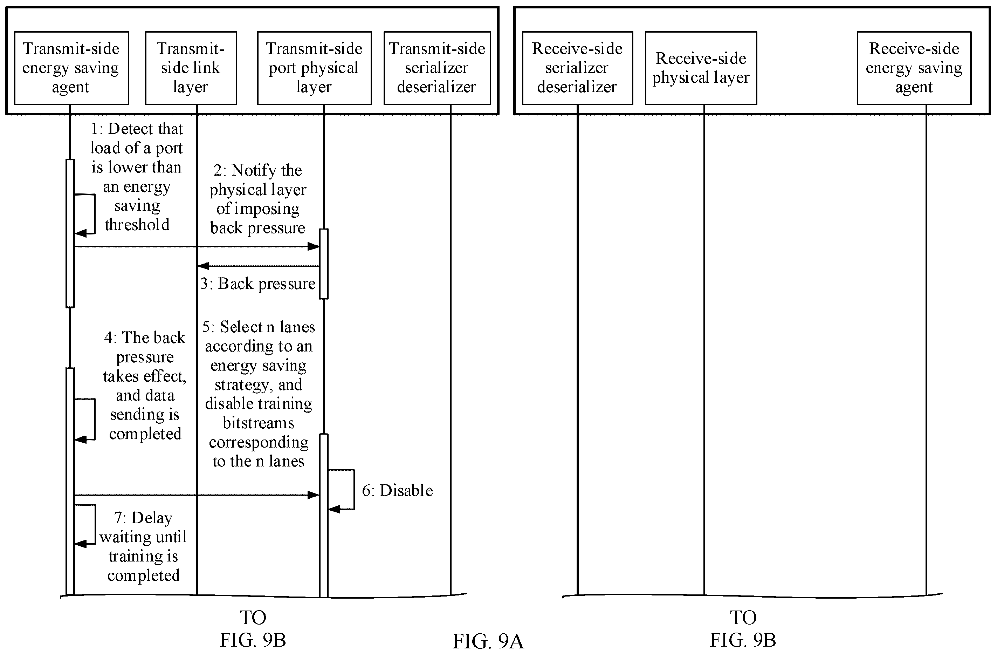

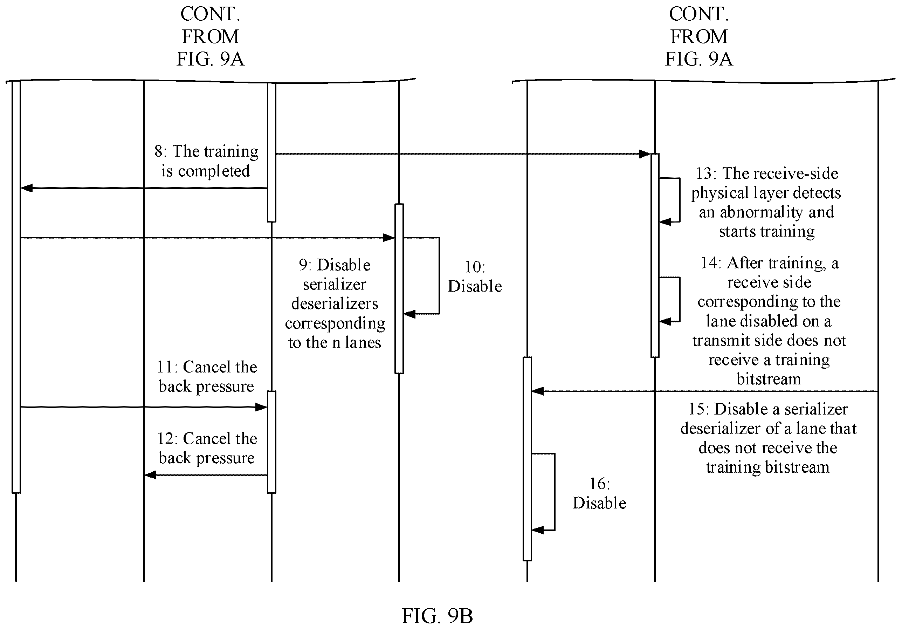

FIG. 9A and FIG. 9B are a schematic flowchart in which a lane is non-forcibly disabled according to this application. 1: Detect that load of a port is lower than an energy saving threshold. 2: A transmit-side energy saving agent notifies a transmit-side physical layer of imposing back pressure. 3: The physical layer imposes back pressure at a transmit-side link layer. 4: The transmit-side energy saving agent determines that the back pressure takes effect and data sending is completed. 5: The transmit-side energy saving agent selects n lanes according to an energy saving strategy, and disables training bitstreams corresponding to the n lanes. 6: Disable the training bitstreams corresponding to the n lanes. 7: Delay waiting until training is completed. 8: The training is completed. 9: The transmit-side energy saving agent notifies to disable serdeses corresponding to the n lanes. 10: Disable the serdeses corresponding to the n lanes. 11: The transmit-side energy saving agent notifies the transmit-side physical layer of canceling the back pressure. 12: The physical layer cancels the back pressure at the transmit-side link layer. 13: A receive-side physical layer detects an abnormality and starts training. 14: After training, a receive side corresponding to the lane disabled on the transmit side does not receive training data. 15: Disable a serdes of a lane that does not receive the training data. 16: Disable the serdes.

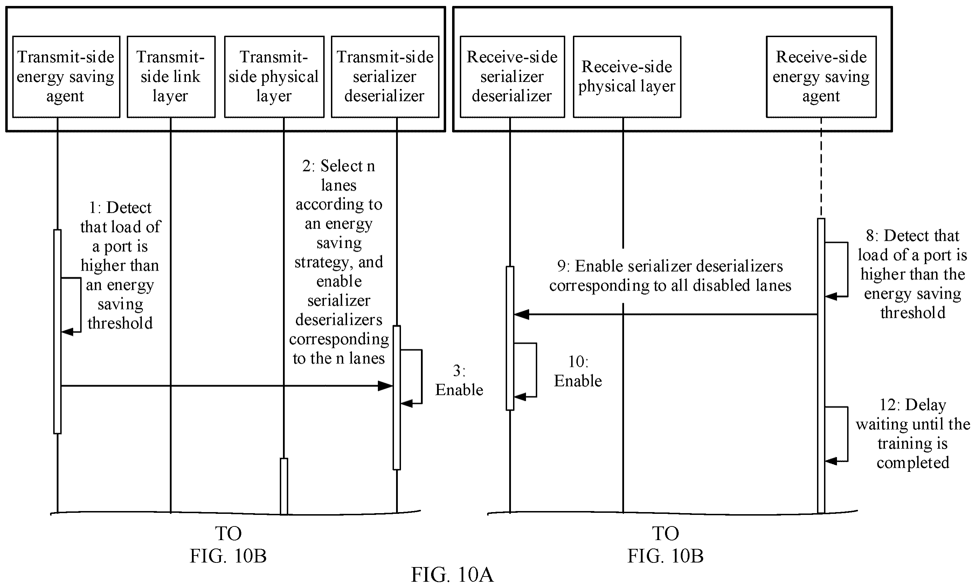

FIG. 10A and FIG. 10B are a schematic flowchart in which a lane is enabled according to this application. 1: A transmit-side energy saving agent detects that load of a port is higher than an energy saving threshold. 2: The transmit-side energy saving agent selects n lanes according to an energy saving strategy, and enables serdeses corresponding to the n lanes. 3: Enable the serdeses corresponding to the n lanes. 4: Train the n lanes. 5: Delay waiting until training is completed. 6: The training is completed. 7: After training, n lanes are enabled at two ends, but the n lanes are in a non-operating state. 8: A receive-side energy saving agent detects that load of a port is higher than the energy saving threshold. 9: Enable serdeses corresponding to all disabled lanes. 10: Enable the serdeses. 11: Train all lanes. 12: Delay waiting until training is completed. 13: Train the lanes at the two ends. The training succeeds if the two ends enable the lanes; or the training fails if either of the two ends does not enable the lanes. 14: The training is completed. 15: Disable a serdes of a lane that fails to be trained. 16: Disable the serdes.

For detailed explanations of FIG. 7A to FIG. 7C to FIG. 10A and FIG. 10B, refer to the descriptions of the foregoing embodiments.

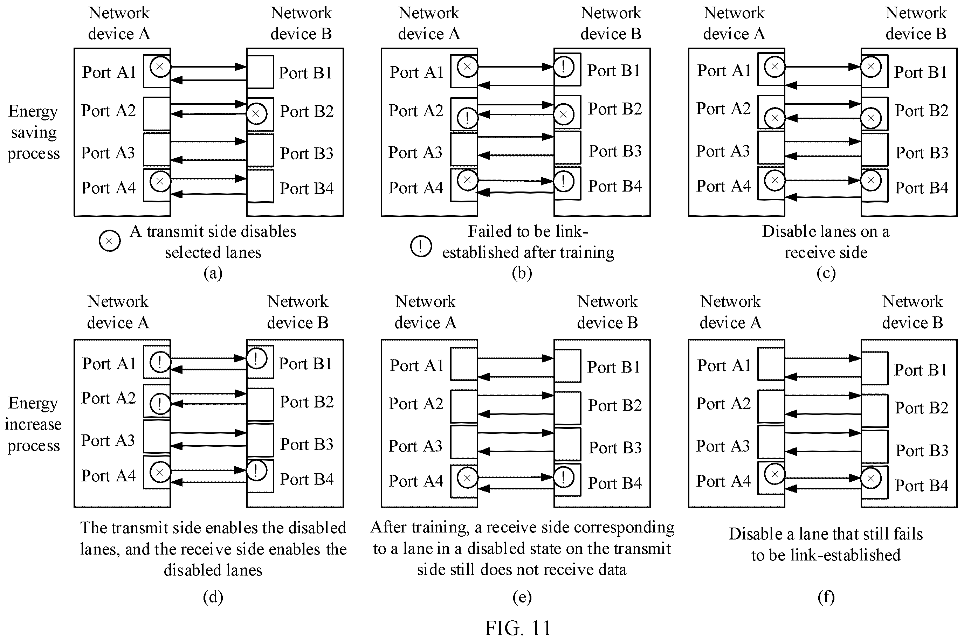

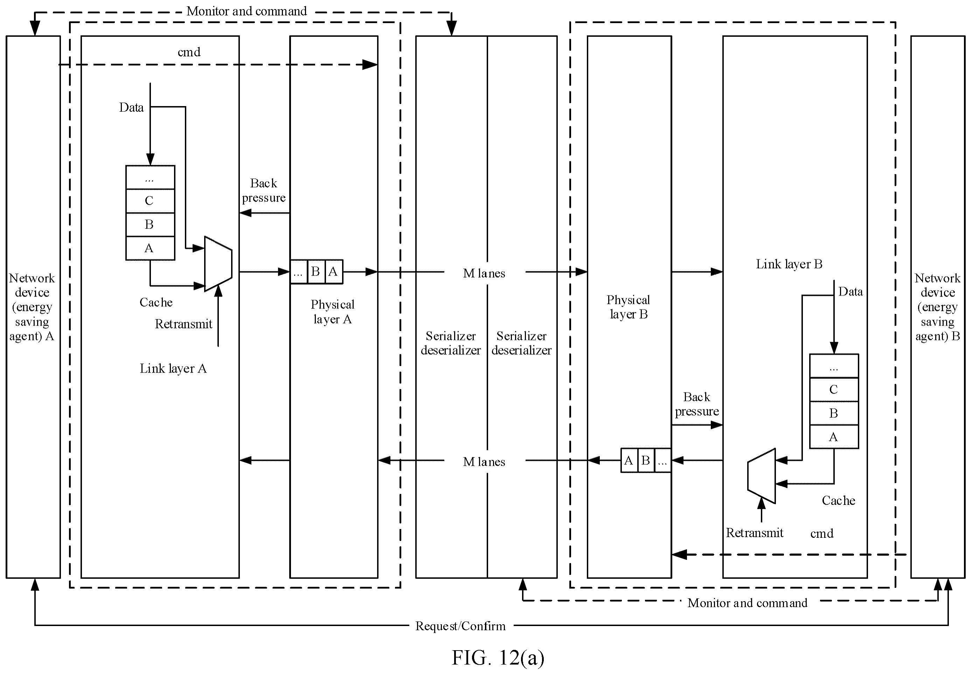

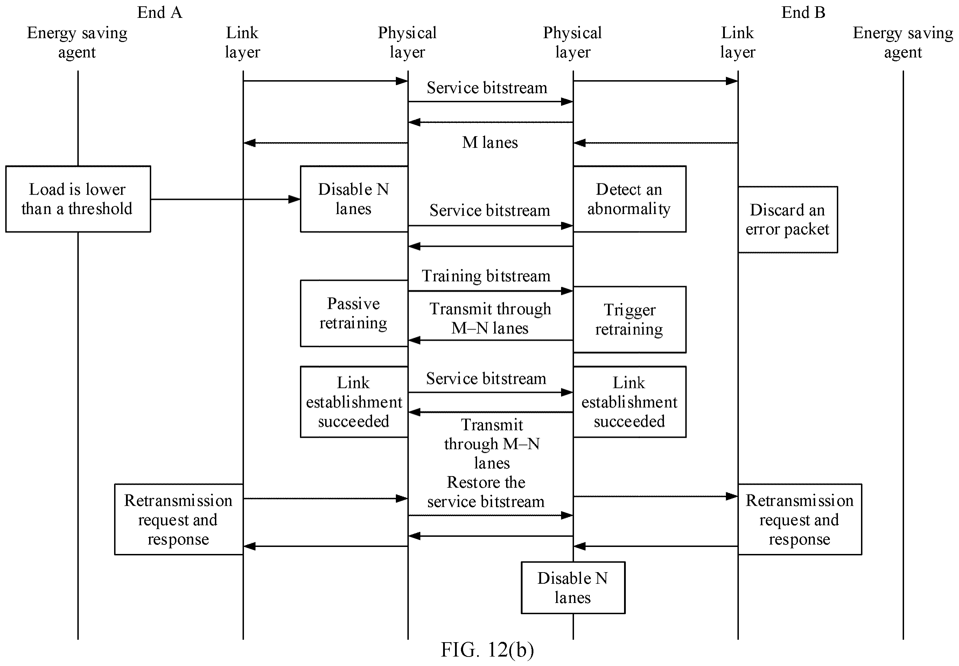

The following describes, with reference to FIG. 11 and FIG. 12(a) and FIG. 12(b), the control method provided in this application described in the foregoing embodiments by using examples.

It is assumed that a network device A includes a port A1 to a port A4. A network device B includes a port B1 to a port B4. The port A1 of the network device A is connected to the port B1 of the network device B through a link 1, the port A1 is configured to send data, and the port B1 is configured to receive data. The network device A sends data to the network device B through the port A1, the data is transmitted through the link 1, and the network device B receives, through the port B1, the data sent by the network device A. The port A2 of the network device A is connected to the port B2 of the network device B through a link 2, the port A2 is configured to receive data, and the port B2 is configured to send data. Each link includes two lanes.

The network device A and the network device B each configure an energy saving agent, and the energy saving agent adjusts, according to an energy saving strategy and performance data that are obtained from a controller, enabling or disabling of a lane corresponding to a port. A lane disabling process shown in (a) to (c) in FIG. 11 is an energy saving process. A lane enabling process shown in (d) to (f) in FIG. 11 is an energy increase process.

As shown in (a) in FIG. 11, when performance data of the port A1 meets a disabling condition indicated by the energy saving strategy, a lane 1 corresponding to the port A1 is disabled. When performance data of the port A4 meets the disabling condition indicated by the energy saving strategy, a lane 1 corresponding to the port A4 is disabled. When performance data of the port B2 meets the disabling condition indicated by the energy saving strategy, a lane 2 corresponding to the port B2 is disabled.

As shown in (b) in FIG. 11, the network device A stops sending a training bitstream. If the network device B does not receive the training bitstream through a lane 1 corresponding to the port B1, the network device B determines that the port B1 is in a non-operating state, and performance data of the port B1 meets the disabling condition indicated by the energy saving strategy. After the lane 1 corresponding to the port A4 and the lane 2 corresponding to the port B2 are trained, the network device B determines that the port B4 is in the non-operating state, and performance data of the port B4 meets the disabling condition indicated by the energy saving strategy. The network device A determines that the port A2 is in the non-operating state, that is, performance data of the port A2 meets the disabling condition indicated by the energy saving strategy.

As shown in (c) in FIG. 11, when the performance data of the port B1 meets the disabling condition indicated by the energy saving strategy, the lane 1 corresponding to the port B1 is disabled. When the performance data of the port B4 meets the disabling condition indicated by the energy saving strategy, a lane 1 corresponding to the port B4 is disabled. When the performance data of the port A2 meets the disabling condition indicated by the energy saving strategy, a lane 2 corresponding to the port A2 is disabled.

As shown in (d) in FIG. 11, when the performance data of the port A1 meets an enabling condition indicated by the energy saving strategy, the lane 1 corresponding to the port A1 is enabled. The lane 2 corresponding to port A2 is enabled. The lane 1 corresponding to port B4 is enabled. The lane 1 corresponding to port B1 is enabled.

As shown in (e) in FIG. 11, after the port A1 of the network device A and the port B1 of the network device B are successfully trained through the lanes 1 on the link 1, data transmission is restored. After the port A2 of the network device A and the port B2 of the network device B are successfully trained through the lanes 2 on the link 2, data transmission is restored. The lane 1 corresponding to the port A4 of the network device A is disabled, and the training fails.

As shown in (f) in FIG. 11, after the lane 1 of the port B4 is enabled, no data is received through the lane 1 of the port B4, and the lane 1 corresponding to the port B4 is disabled. The lanes 1 between the port A4 of the network device A and the port B2 of the network device B on a link 4 are in an energy saving state.

FIG. 12(a) is a diagram of delivering an energy saving instruction according to this application. A control chip in a network device runs an energy saving agent application, and monitors and sends a command to a serdes. When performance data meets a disabling condition indicated by an energy saving strategy, back pressure is imposed, to disable a serdes corresponding to a lane. FIG. 12(b) is a diagram of delivering an energy saving instruction according to this application.

An example in which a network device A serves as a transmit end (end A) and a network device B serves a receive end (end B) is used for description.
(a) A service bitstream is transmitted via serdeses of M lanes.
(b) An energy saving agent at the end A detects that load of a serdes interface is lower than a preset data traffic threshold.
(c) A physical layer at the end A enables a back pressure signal to a link layer to stop transmitting data to the physical layer.
(d) The energy saving agent at the end A controls to turn off serdeses of n lanes on a transmit side.
(e) Start to retrain a link because a part of a lane on a receive side at the end B does not receive a data stream.
(f) The physical layer at the end A cooperates with the end B to retrain the link.
(g) The end A and the end B re-establish a link on (M-N) lanes.
(h) The physical layer at the end A disables the back pressure signal to the link layer, and the link layer prepares to transmit data to the physical layer.
(i) A link layer at the end B sends a retransmission request to the link layer at the end A.
(j) The end A responds to the retransmission request and starts to transmit data to the end B.
(k) The energy saving agent at the end A sends a command to an energy saving agent at the end B to control the end B to disable receive sides of serdeses of N lanes that are link-unestablished.

The foregoing embodiments are described by using an example in which the status of the lane corresponding to the port in the network device is adjusted based on the performance data of the port, and energy saving is performed on the lane corresponding to each port.

In some other embodiments, a plurality of ports included in a network device serve as one port group, and energy saving is implemented for the port group as a whole. A difference from the foregoing embodiments lies in that obtained performance data of the network device may be performance data of the entire network device. For example, the performance data of the network device includes a sum of performance data of all ports included in the network device. When the performance data of the network device meets a disabling condition indicated by an energy saving strategy, at least one of a plurality of ports included in the network device is disabled, that is, all lanes corresponding to the port are disabled. For example, a port with minimum load in the plurality of ports included in the network device is disabled. When the performance data of the network device meets an enabling condition indicated by the energy saving strategy, at least one of the plurality of ports included in the network device is enabled, that is, at least one lane that is disabled and that corresponds to the port is enabled.

Optionally, before the at least one of the plurality of ports included in the network device is disabled, traffic on the at least one port may be migrated to a port that does not need to be disabled in the network device, to avoid a failure in data transmission caused by disabling the at least one port.

It should be noted that a status of at least one of ports in a transmit-side network device and a status of at least one of ports in a receive-end network device are kept enabled, to ensure that data is transmitted through a link between the transmit-side network device and the receive-end network device. The transmit-side network device sends data based on at least one link that is kept, and the receive-end network device receives data based on at least one link that is kept, to determine, based on performance data of the receive-end network device, whether to enable a disabled receive port.

For specific explanations of adjusting the status of the port, refer to the descriptions of the status of the lane corresponding to the port in the foregoing embodiments. Details are not described again.

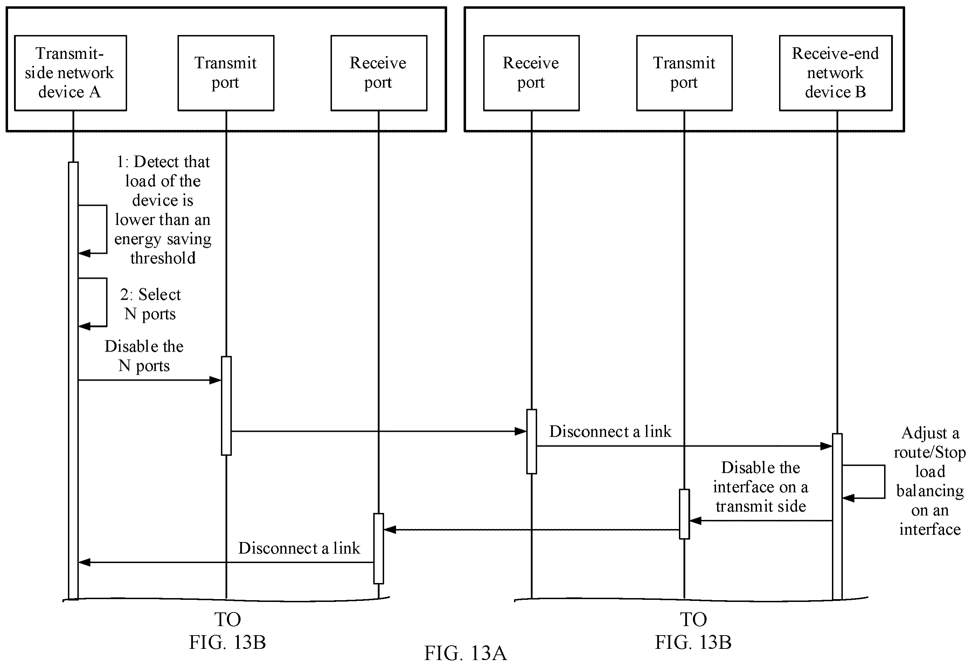

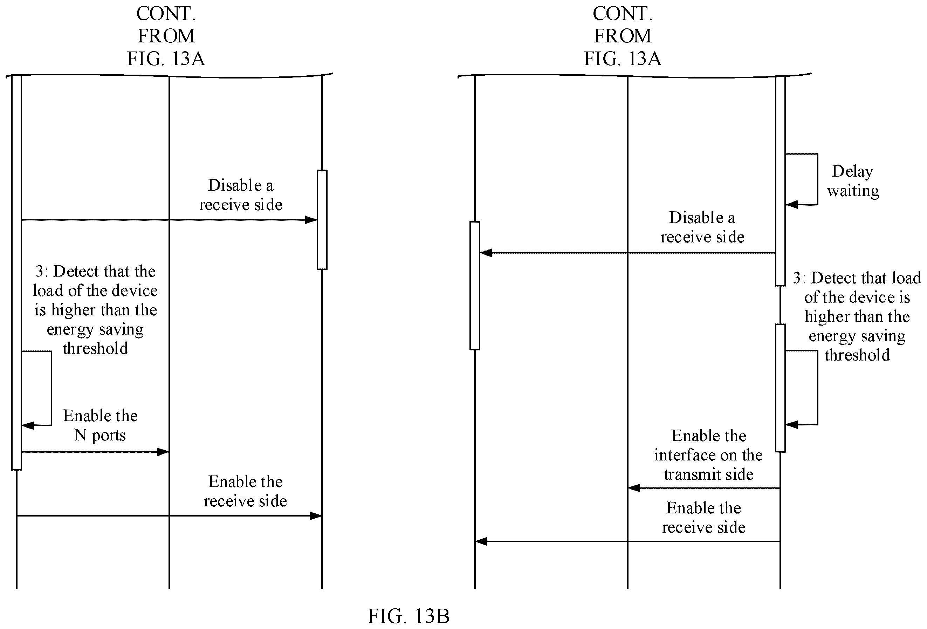

For example, FIG. 13A and FIG. 13B are a schematic flowchart of a control method according to this application.
1: There are M ports between a network device A and a network device B, and these ports jointly balance and carry traffic between the network device A and the network device B.
2: After detecting that performance data of the network device A meets a condition indicated by an energy saving strategy, the network device A selects N ports (M>N) from the ports between the network device A and the network device B to perform an energy saving operation.
   (a) The network device A stops traffic sending on the N ports by modifying a route or a traffic load balancing configuration, and then disables sending directions of the N ports, to enter an energy saving state.
   (b) Receive sides of corresponding ports in the network device B detect that the ports are abnormal, and the network device B stops traffic sending on N ports by modifying a route or a traffic load balancing configuration, and then disables sending directions of the N ports.
   (c) The N ports of the network device A detect that the network device B is abnormal, and then receive sides of the N ports that are detected abnormal by the network device B are disabled, so that the N ports of the network device A completely enter the energy saving state.
   (d) If the network device B determines, based on load, that an energy saving measure also needs to be taken for the ports between the network device A and the network device B, the network device B disables the receive sides of the N ports that are in an abnormal state.
3: After detecting that bidirectional traffic load between the network device A and the network device B is higher than an energy increase threshold, the network device A and the network device B perform an energy increase operation on the N interfaces in the energy saving state in the interfaces between the network device A and the network device B.
   (a) The network device A enables the interface disabled due to energy saving.
   (b) The network device B enables the interface disabled due to energy saving.

It may be understood that, to implement functions in the foregoing embodiments, the controller includes a corresponding hardware structure and/or software module for performing the functions. A person skilled in the art should be easily aware that, with reference to units and method steps of the examples described in embodiments disclosed in this application, this application can be implemented by hardware or a combination of hardware and computer software. Whether a function is performed by hardware or hardware driven by computer software depends on particular application scenarios and design constraints of the technical solutions.

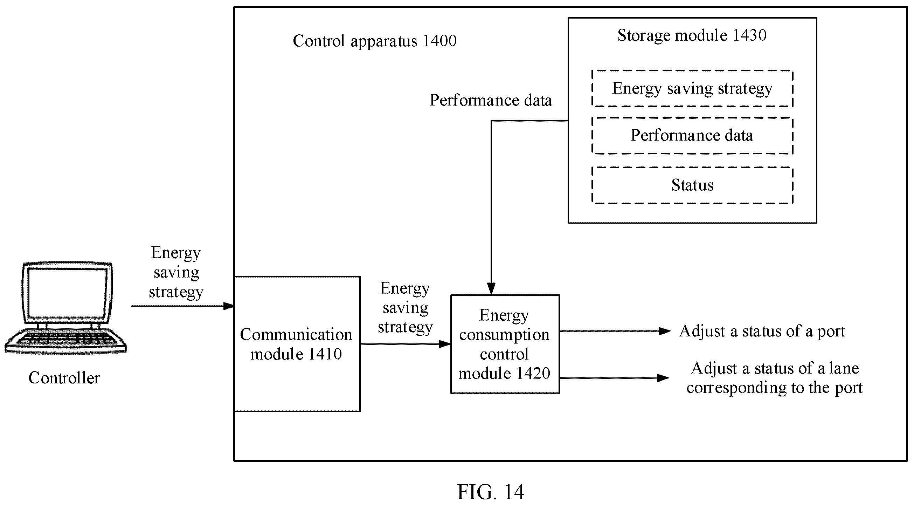

The foregoing describes in detail the control method provided in this application with reference to FIG. 1 to FIG. 13A and FIG. 13B. The following describes a control apparatus provided in this application with reference to FIG. 14.

FIG. 14 is a diagram of a structure of a possible control apparatus according to this application. The control apparatus may be configured to implement the functions of the controller in the foregoing method embodiments, and therefore can also achieve beneficial effect of the foregoing method embodiments. In this embodiment, the control apparatus may be the network device shown in FIG. 3, or may be a module (for example, a chip) used in a server.

As shown in FIG. 14, the control apparatus 1400 includes a communication module 1410, an energy consumption control module 1420, and a storage module 1430. The control apparatus 1400 is configured to implement the functions of the network device in the method embodiment shown in FIG. 3.

The communication module 1410 is configured to obtain an energy saving strategy of the network device, where the energy saving strategy indicates a condition for enabling or disabling a port or a lane corresponding to the port in the network device. For example, the communication module 1410 is configured to perform step 310 in FIG. 3.

The energy consumption control module 1420 is configured to: obtain performance data of the network device, and adjust, according to the energy saving strategy and the performance data, a status of the port or the lane corresponding to the port, where the status includes enabled or disabled, and the performance data indicates a running feature of the port in the network device in a current period. For example, the energy consumption control module 1420 is configured to perform step 320 and step 330 in FIG. 3.

The storage module 1430 is configured to store the energy saving strategy, the performance data, and the status, so that the energy consumption control module 1420 adjusts, according to the energy saving strategy and the performance data, the status of the port or the lane corresponding to the port.

It should be understood that the control apparatus 1400 in this embodiment of this application may be implemented by using an application-specific integrated circuit (application-specific integrated circuit, ASIC), or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof. Alternatively, when the control method shown in FIG. 3 may be implemented by software, the control apparatus 1400 and the modules of the control apparatus 1400 may alternatively be software modules.

The control apparatus 1400 in this embodiment of this application may correspondingly perform the method described in embodiments of this application. In addition, the foregoing and other operations and/or functions of the units in the control apparatus 1400 are used to implement corresponding procedures of the method in FIG. 3. For brevity, details are not described herein again.

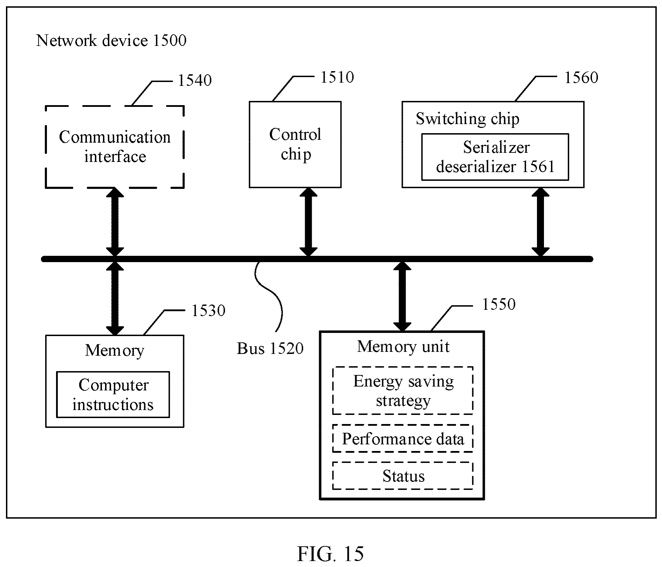

FIG. 15 is a diagram of a structure of a network device 1500 according to this application. As shown in the figure, the network device 1500 includes a control chip 1510, a bus 1520, a memory 1530, a communication interface 1540, a memory unit 1550 (which may also be referred to as a main memory (main memory) unit), and a switching chip 1560. The switching chip 1560 includes a serializer deserializer 1561. The control chip 1510, the switching chip 1560, the memory 1530, the memory unit 1550, and the communication interface 1540 are connected through the bus 1520.

It should be understood that, in this embodiment, the control chip 1510 may be a CPU, or the control chip 1510 may be another general-purpose processor, a digital signal processor (digital signal processor, DSP), an ASIC, an FPGA or another programmable logic device, a discrete gate or a transistor logic device, a discrete hardware component, or the like. The general-purpose processor may be a microprocessor, any conventional processor, or the like.

Alternatively, the processor may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 1540 is configured to implement communication between the network device 1500 and an external device or component. In this embodiment, when the network device 1500 is configured to implement the function of the network device shown in FIG. 3, the communication interface 1540 is configured to obtain an energy saving strategy and performance data, so that the control chip 1510 adjusts, according to the energy saving strategy and the performance data, a status of a port or a lane corresponding to the port, where the status includes enabled or disabled.

The bus 1520 may include a path, configured to transmit information between the foregoing components (for example, the control chip 1510, the memory unit 1550, the memory 1530, and the switching chip 1560). In addition to a data bus, the bus 1520 may further include a power bus, a control bus, a status signal bus, and the like. However, for clear description, various buses in the figure are marked as the bus 1520. The bus 1520 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like. The bus 1520 may be classified into an address bus, a data bus, a control bus, or the like.

For example, the control chip 1510 may be a multi-core (multi-CPU) control chip. The control chip herein may be one or more devices, circuits, and/or computing units configured to process data (for example, computer program instructions).

It should be noted that, in FIG. 15, only an example in which the network device 1500 includes one control chip 1510 and one memory 1530 is used. Herein, the control chip 1510 and the memory 1530 are separately configured to indicate one type of component or device. In a specific embodiment, a quantity of components or devices of each type may be determined based on a service requirement.

The memory unit 1550 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory unit 1550 is configured to store information such as the energy saving strategy, the performance data, and the status.

The memory 1530 may correspond to a storage medium configured to store information such as the energy saving strategy, the performance data, and the status in the foregoing method embodiments, for example, a magnetic disk, for example, a hard disk drive or a solid-state drive.

The network device 1500 may be a general-purpose device or a dedicated device. For example, the network device 1500 may be an edge device (for example, a box carrying a chip having a processing capability), or the like. Optionally, the network device 1500 may alternatively be a server or another device having a computing capability.

It should be understood that the network device 1500 according to this embodiment may correspond to the control apparatus 1400 in this embodiment, and may correspond to a corresponding body that performs any method in FIG. 3. In addition, the foregoing and other operations and/or functions of the modules in the control apparatus 1400 are respectively used to implement the corresponding procedures of the method in FIG. 3. For brevity, details are not described herein again.

An embodiment of this application provides a chip, including a processor and a power supply circuit. The power supply circuit is configured to supply power to the processor, and the processor is configured to perform operation steps of the control method in the foregoing method embodiments.

The method steps in embodiments may be implemented by hardware, or may be implemented by a control chip executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist in the computing device as discrete components.

All or some of the foregoing embodiments may be implemented by software, hardware, firmware, or any combination thereof. When software is used to implement embodiments, all or some embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A control method, wherein the method is performed by a first chip of a network device, and the method comprises:
obtaining an energy saving strategy of the network device, wherein the energy saving strategy indicates a condition for enabling or disabling a port or a lane corresponding to the port in the network device;
obtaining performance data of the network device, wherein the performance data indicates a running feature of the port in the network device in a current period; and
adjusting, according to the energy saving strategy and the performance data, a status of the port or the lane corresponding to the port, wherein the status comprises enabled or disabled.

2. The method according to claim 1, wherein adjusting, according to the energy saving strategy and the performance data, the status of the port or the lane corresponding to the port comprises:
when the performance data meets a disabling condition indicated by the energy saving strategy, adjusting, based on the performance data, a status of at least one port or a status of a lane corresponding to the port in the network device.

3. The method according to claim 2, wherein the performance data comprises at least one of an interface bandwidth usage ratio and a queue depth.

4. The method according to any one of claims 1 to 3, wherein adjusting the status of the lane corresponding to the port comprises:
adjusting a status of a serializer deserializer corresponding to the lane, to transit from an active state to an energy saving state.

5. The method according to claim 4, wherein the network device further comprises a second chip, the port is configured to send data, and adjusting the status of the lane corresponding to the port comprises:
indicating the second chip to stop sending a training bitstream, and adjusting the status of the lane corresponding to the port.

6. The method according to claim 4, wherein the port is configured to receive data, and adjusting the status of the lane corresponding to the port comprises:
when no training bitstream is received, adjusting the status of the lane corresponding to the port.

7. The method according to any one of claims 1 to 5, wherein the port is configured to send the data, and adjusting the status of the lane corresponding to the port comprises:
when a link layer stops data transmission, adjusting the status of the lane corresponding to the port.

8. The method according to any one of claims 1 to 7, wherein the status of the port or the lane corresponding to the port is disabled, and the method further comprises:
when the performance data meets an enabling condition indicated by the energy saving strategy, adjusting the port or the lane corresponding to the port to be enabled.

9. The method according to claim 8, wherein adjusting the lane corresponding to the port to be enabled comprises:
adjusting the status of the serializer deserializer corresponding to the lane, to transit from the energy saving state to the active state.

10. The method according to any one of claims 1 to 9, wherein obtaining the energy saving strategy of the network device comprises:
obtaining the energy saving strategy of the network device based on a feature of the network device, wherein the feature of the network device comprises at least one of the following: a position of the network device in a network, a scale of the network device, a configuration of the network device, and the performance data of the network device.

11. A control apparatus, wherein the control apparatus comprises a module for performing operation steps of the method according to any one of claims 1 to 10.

12. A chip, wherein the chip comprises a processor and a power supply circuit, wherein the power supply circuit is configured to supply power to the processor, and the processor is configured to perform operation steps of the method according to any one of claims 1 to 10.

13. A network device, wherein the network device comprises a memory and a processor, the memory is configured to store a group of computer instructions, and when executing the group of computer instructions, the processor performs operation steps of the method according to any one of claims 1 to 10.

14. A communication system, wherein the communication system comprises a first network device and a second network device, the first network device is configured to perform operation steps of the method according to any one of claims 1 to 5 and claims 7 to 10, and the second network device is configured to perform operation steps of the method according to any one of claims 1 to 4 and claims 6 to 10.

15. The system according to claim 14, wherein the communication system further comprises a controller, the controller is configured to send an energy saving strategy to the first network device and the second network device, and the energy saving strategy indicates a condition for enabling or disabling ports or lanes corresponding to the ports of the first network device and the second network device.
